# EUROPÄISCHE PATENTANMELDUNG

(11) **EP 0 522 278 A1**
(43) Veröffentlichungstag der Anmeldung: **13.01.1993**
(21) Anmeldenummer: 92109129.4
(22) Anmeldetag: 29.05.1992
(51) Int. Cl.: B29C 47/92

(54) **Verfahren zur Regelung des Durchmessers von in Blasfolienanlagen hergestellten Schlauchfolien**

(30) Priorität: 08.07.1991 DE 4122588; 14.11.1991 DE 4137516
(71) Anmelder: Windmöller & Hölscher, D-49525 Lengerich (DE)
(72) Erfinder: Sensen, Klemens, Dipl.-Ing., W-4540 Lengerich (DE); Gandelheidt, Edgar, Dipl.-Ing., W-4540 Lengerich (DE); Sandkämper, Horst, W-4506 Hagen a.T.W. (DE)
(74) Vertreter: Gossel, Hans K., Dipl.-Ing.

(57) **Zusammenfassung**

Zur Regelung des Durchmessers von Schlauchfolien, die in einer aus einem Extruder (1) mit Folienblaskopf (2) mit Innenkühlung, einem Kalibrierkorb (8) und einer Flachlegeeinrichtung und Abzugseinrichtung bestehenden Blasfolienanlage hergestellt worden sind, werden die ausgetauschte Innenkühlluftmenge und/oder die Extruderdrehzahl und/oder die Temperatur der extrudierten Kunststoffmasse und/oder die Abzugsgeschwindigkeit und/oder die Außenkühlung und/oder die Höhe des Kalibrierkorbes gesteuert. Um die Regelung einfach und störungsfrei durchführen zu können, ohne die Höhenlage der Frostlinie (7) genau messen zu müssen, wird der Abstand (X) der Schlauchfolie im Bereich des Wendepunktes (11) des Aufblasbereiches zumindestens einem gestellfesten Sensor (6) gemessen und durch einen ersten Regelkreis, der bei Abweichungen des Abstandes von einem vorgegebenen Sollwert die ausgetauschte Menge von Innenkühlluft entsprechend erhöht oder erniedrigt, auf dem Sollwert gehalten. Der Durchmesser der Schlauchfolie wird oberhalb der Frostlinie gemessen und durch einen zweiten Regelkreis, der bei Abweichungen des Durchmessers von einem vorgegebenen Sollwert die Massetemperatur und/oder Extruderdrehzahl und/oder die Abzugsgeschwindigkeit entsprechend erhöht oder erniedrigt, auf dem Durchmessersollwert gehalten.

## Beschreibung

Die Erfindung betrifft ein Verfahren zur Regelung des Durchmessers bestehend aus einem Extruder mit Folienblaskopf mit Innenkühlung, und einem Kalibrierkorb und einer Flachlege- und Abzugseinrichtung, hergestellten Schlauchfolien, bei dem die ausgetauschte Innenkühlluftmenge und/oder die Extruderdrehzahl und/oder die Temperatur der extrudierten Kunststoffmasse und/oder die Abzugsgeschwindigkeit und/oder die Außenkühlung und/oder die Höhe des Kalibrierkorbes steuerbar sind.

Wesentliche Forderungen bei der Herstellung von Blasfolien aus thermoplastischem Kunststoff bestehen darin, daß eine im wesentlichen gleiche Breite der hergestellten flachgelegten Schlauchfolienbahn und ein im wesentlicher gleicher Orientierungsgrad der beim Aufblasen der Schlauchfolie verstreckten Kunststoffmoleküle beibehalten wird. Dabei hat die Lage der sog. Frostlinie einen entscheidenden Einfluß auf die Folienqualität, da diese sowohl den Orientierungsgrad als auch den Durchmesser der hergestellten Schlauchfolie beeinflußt. Auch für den Herstellungsprozeß selbst ist die Lage der Frostlinie von Bedeutung, da in der hergestellten Schlauchfolie Markierungen auftreten können, wenn diese relativ zum Kalibrierkorb zu hoch liegt, so daß die Stützelemente des Kalibrierkorbs die unerwünschten Markierungen hinterlassen können. Liegt die Frostlinie jedoch relativ zum Kalibrierkorb zu niedrig, kann das gefürchtete "Blasenpumpen" auftreten, das zu einem Abriß der Blasfolie führen kann. Die Frostlinie muß also möglichst konstant gehalten werden, und zwar sowohl relativ zur Austrittsdüse als auch relativ zur Höhe des Kalibrierkorbes.

Zur Regelung der Höhe der Frostlinie sind bereits unterschiedliche Verfahren bekanntgeworden.

Bei den meisten Blasfolienanlagen wird die Lage der Frostlinie nur durch das Bedienungspersonal visuell überwacht. Nach der Erfahrung des Bedienungspersonals werden dann entsprechend der beobachteten Höhe der Frostlinie Einstellungen der Höhe des Kalibrierkorbes, der zu- oder abgeführten Innenkühlluftmenge und/oder in der Ausstoßleistung des Extruders vorgenommen. Eine derartige Einstellung ist jedoch erheblichen Fehlerquellen unterworfen, da sie von der Geschicklichkeit und den Erfahrungen des Bedienungspersonals abhängt.

Aus den DE-PS 27 21 609 und 28 31 212 sind Verfahren zur Regelung von Blasfolienanlagen bekannt, bei denen insbesondere zur Erzielung einer gleichen vorgegebenen Folienbreite die Lage der Frostlinie gemessen und entsprechend den gemessenen Abweichungen der Frostlinie Stellglieder beaufschlagt werden, die Einfluß auf die Foliendicke und/oder den Schlauchfoliendurchmesser nehmen. Ein besonderes Problem dieser bekannten Verfahren liegt aber in den Vorrichtungen und Sensoren zur Erfassung der Frostlinie.

Zur Erfassung der Frostlinie sind Thermosensoren, die die Folientemperatur in Bereichen unter- oder oberhalb der Frostlinie durch die Messung der Infrarotstrahlung erfassen, bekannt. Diese sind jedoch sehr verschmutzungsempfindlich, so daß Betriebsstörungen auftreten können. Thermosensoren sind schließlich zur Messung von sehr dünnen transparenten Folien ungeeignet.

Bekannt sind weiterhin Verfahren, bei denen aus der Energiebilanz unter Berücksichtigung des Rohstoffeinsatzes, des Ausstoßes, der Breite und der Dicke der Folie sowie der Kühllufttemperaturen und weiterer Einflußgrößen die Lage der Frostlinie berechnet wird. Dieses Verfahren ist jedoch ungenau, da es von häufig unbekannten und daher nur schwer abschätzbaren Rohstoffkenndaten abhängig ist. Weiterhin läßt sich der Einfluß des Wärmeübergangskoeffizienten von der Luft zur Folie nur schwer erfassen. Im Ergebnis ist daher keine für die Praxis ausreichend genaue Rechnung möglich.

Aufgabe der Erfindung ist es daher, ein Verfahren der eingangs angegebenen Art zu schaffen, das sich in der Praxis bei guten Ergebnissen einfach und störungsfrei durchführen läßt, ohne daß die Höhenlage der Frostlinie genau gemessen werden muß.

Erfindungsgemäß wird diese Aufgabe bei einem Verfahren der gattungsgemäßen Art dadurch gelöst, daß der Abstand der Schlauchfolie im Bereich des Wendepunktes des Aufblasbereiches zu einem gestellfesten Sensor gemessen und durch einen ersten Regelkreis, der bei Abweichungen des Abstandes von einem vorgegebenen Sollwert die ausgetauschte Menge der Innenkühlluft entsprechend erhöht oder erniedrigt, auf dem Sollwert gehalten wird, und daß der Durchmesser der Schlauchfolie oberhalb der Frostlinie gemessen und durch einen zweiten Regelkreis, der bei Abweichungen des Durchmessers von einem vorgegebenen Sollwert die Massetemperatur und/oder Extruderdrehzahl und/oder die Abzugsgeschwindigkeit entsprechend erhöht oder erniedrigt, auf dem Durchmessersollwert gehalten wird.

Die Erfindung beruht zunächst auf der Erkenntnis, daß eine bestimmte Blasenform im Aufblasbereich der Schlauchfolie ein bestimmtes Verhältnis der Längs- und Querdehnungsgeschwindigkeiten der Schlauchfolie, die den Orientierungsgrad bestimmt, bedingt. Ein gewünschter Orientierungsgrad, der die gewünschte Folienqualität zur Folge hat, läßt sich dadurch durch die Einstellung einer bestimmten Blasenform im Aufblasbereich einstellen, die zuvor empirisch ermittelt und festgelegt werden kann. Wird also während der Herstellung der Blasfolie eine bestimmte Blasenform im Aufblasbereich beibehalten, kann davon ausgegangen werden, daß Folien gleichbleibender Qualität, also mit gleicher Breite und mit gleichem Orientierungsgrad hergestellt werden.

Nach dem erfindungsgemäßen Verfahren läßt sich ohne unmittelbare Messung der Höhe der Frostlinie nun nicht nur die Breite der hergestellten Kunststoffschlauches auf eine gewünschte Sollbreite regeln, es läßt sich zusätzlich auch der gewünschte Orientierungsgrad der Kunststoffmoleküle erreichen, weil ein gleicher Orientierungsgrad immer dann erzielt wird, wenn die zugehörige Blasenform beibehalten wird.

Die Erfindung beruht weiterhin auf der Erkenntnis, daß sich die Blasenform im Aufblasbereich im wesentlichen nur durch die Lage des Wendepunktee des sinusförmigen Verlaufes der Folie im Aufblasbereich bestimmen läßt. Es kann also davon ausgegangen werden, daß die Blasenform immer dann gleich ist, wenn der Wendepunkt an derselben Stelle liegt.

Das erfindungsgemäße Verfahren stellt also zunächst einmal dadurch sicher, daß die Schlauchfolie mit gleichem Orientierungsgrad aufgeblasen wird, daß die Lage des Wendepunktes konstant gehalten wird. Der entsprechende erste Regelkreis beeinflußt daher bei der Feststellung von Regelabweichungen die Menge der ausgetauschten Innenkühlluft, was in einfacher Weise durch Steuerung der entsprechenden Gebläse geschehen kann.

Darüber hinaus wird die Blasenform und der Durchmesser der hergestellten Schlauchfolie auch durch die Höhe der Frostlinie beeinflußt. Ergibt sich nun bei gleicher Form der Schlauchblase im Aufblasbereich ein gleicher Durchmesser der hergestellten Schlauchfolie, kann davon ausgegangen werden, daß auch die Frostlinie ihre Sollage beibehalten hat. Um also die richtige Höhenlage der Frostlinie beizubehalten, wird durch einen zweiten Regelkreis der Durchmesser der hergestellten Schlauchfolie überwacht. Ändert sich dieser, wird entsprechend der gemessenen Regelabweichung die Massetemperatur des extrudierten Kunststoffes und/oder die Extruderdrehzahl und/oder die Abzugsgeschwindigkeit und/oder die Außenkühlung entsprechend erhöht oder erniedrigt.

Das erfindungsgemäße Verfahren zeichnet sich daher dadurch aus, daß es durch Erfassung einfacher Regelgrößen eine einfache Regelung ermöglicht.

Das erfindungsgemäße Verfahren setzt zwar zwei parallel zueinander ablaufende Regelverfahren voraus, die einander jedoch wegen der unterschiedlichen beaufschlagten Stellglieder kaum nachteilig gegenseitig beeinflußen, so daß ein gegeneinander gerichtetes Arbeiten der Regelkreise nicht befürchtet werden muß. Im übrigen können die Regelcharakteristiken so aufeinander abgestimmt werden, daß negative Beeinflussungen vermieden werden.

Nach dem erfindungsgemäßen Verfahren wird also die äußere Wandung der Blasfolie im Aufblasbereich an mindestens einer ersten, unterhalb der Frostlinie liegenden Meßstelle gemessen, wobei die Zuführung und Abführung der Innenkühlluft derart geregelt wird, daß die äußere Begrenzung der Blasfolie an der ersten Meßstelle konstant gehalten wird, und daß die äußere Wandung der Blasfolie an einer zweiten, oberhalb der Frostlinie liegenden Stelle gemessen und der Meßwert durch einen geeigneten Regelkreis konstant auf dem vorgegebenen Sollwert gehalten wird.

Der Abstand der Schlauchfolie zu einem gestellfesten Sensor kann auch im Bereich zwischen dem Wendepunkt und der Frostlinie gemessen werden.

Der Durchmesser der Blasfolie oberhalb der Frostlinie kann im Bereich des Kalibrierkorbes oder aber auch an der flachgelegten Schlauchfolie gemessen werden.

Bei dem erfindungsgemäßen Regelverfahren sind somit mindestens zwei unabhängige Meßaufnehmer vorgesehen, die die äußere Begrenzung der Blase bzw. der flachgelegten Folie abtasten.

Der Sensor an der ersten Meßstelle unterhalb der Frostlinie hat die Aufgabe der Regelung der Füllung der Schlauchblase, also der Steuerung der Zu- und Abführung der Innenkühlluft in der Weise, daß die Blase an der ersten Meßstelle einen konstanten Abstand zum Meßaufnehmer beibehält.

Wenn sich die Höhe der Frostlinie durch äußere Einflüsse verändert, verändert sich auch die Blasenform. Durch den ersten Regelkreis wird die äußere Begrenzung der Blasfolie im Aufblasbereich an der ersten Meßstelle konstant gehalten.

Die Blasenform ändert sich allerdings auch, wenn die äußere Begrenzung der Blasfolie an der zweiten Meßstelle nicht mehr mit dem Sollwert übereinstimmt. Auch eine derartige Abweichung wird durch die Verlagerung der Frostlinie verursacht. Wird der Meßwert auch an der zweiten Meßstelle konstant gehalten, bleibt auch die Frostlinie bei sonst unveränderter Form der Blase im Aufblasbereich konstant.

Ein Ausführungsbeispiel der Erfindung wird nachstehend anhand der Zeichnung näher erläutert. In dieser zeigt
- Fig. 1: eine Blasfolienanlage in schematischer Darstellung in Seitenansicht,
- Fig. 2: den Aufblasbereich der Blasfolie bei richtiger Lage der Frostlinie,
- Fig. 3: den Aufblasbereich der Blasfolie bei nach unten abgesackter Frostlinie und
- Fig. 4: den Aufblasbereich der Blasfolie mit richtiger Lage der Frostlinie.

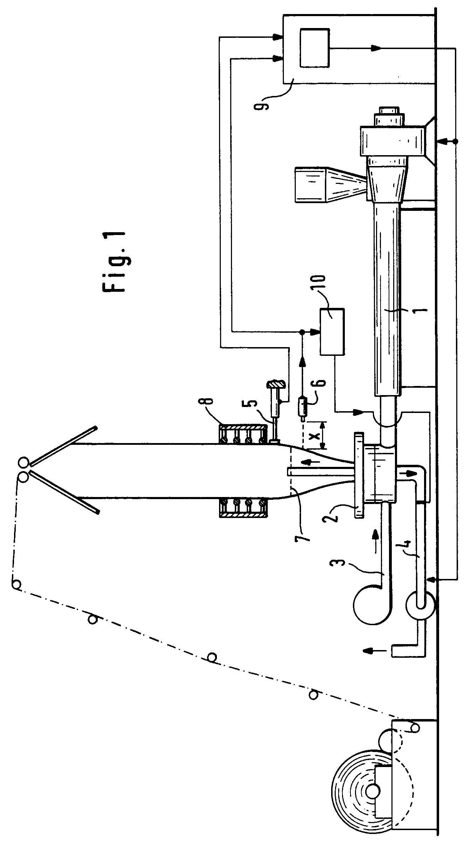

Bei der aus Fig. 1 ersichtlichen Blasfolienanlage wird der Ringdüse des Folienblaskopfes 2 durch den Extruder 1 ein schmelzflüssiger Kunststoff zugeführt. Dieser verläßt den Blaskopf 2 in Form eines Folienschlauches nach oben hin und wird sodann zu einer Folienblase aufgeblasen. Über eine Leitung 3 wird dem Blaskopf 2 Innenkühlluft zugeführt. Diese wird über eine Absaugleitung aus der Folienblase wieder abgezogen und über die Leitung 4 abgeführt.

Oberhalb der Frostlinie 7 befindet sich ein Kalibrierkorb 8. Unterhalb der Frostlinie 7 ist der erste Meßaufnehmer 6 angeordnet, der die äußere Begrenzung der Blasfolie an einer ersten, unterhalb der Frostlinie, aber oberhalb des Wendepunktes der Blasenkurve liegenden Meßstelle relativ zu einem gestellfesten Punkt mißt.

Die äußere Begrenzung der Blasfolie wird ferner an einer zweiten, oberhalb der Frostlinie 7 liegenden Meßstelle gemessen, an der der zweite Meßaufnehmer 5 angeordnet ist. Die zweite Meßstelle 5 liegt unterhalb des Kalibrierkorbes 8.

Die Meßwerte der ersten und zweiten Meßstelle werden Rechner 9 zugeführt und dort verarbeitet. Der oder die Rechner 9 steuern die Zu- und Abführung der Innenkühlluft sowie die Leistung des Extruders 1.

Der Meßwert der ersten Meßstelle 6 wird dem Blasenregler 10 zugeführt, der die Zuführung und Abführung der Innenkühlluftmenge steuert.

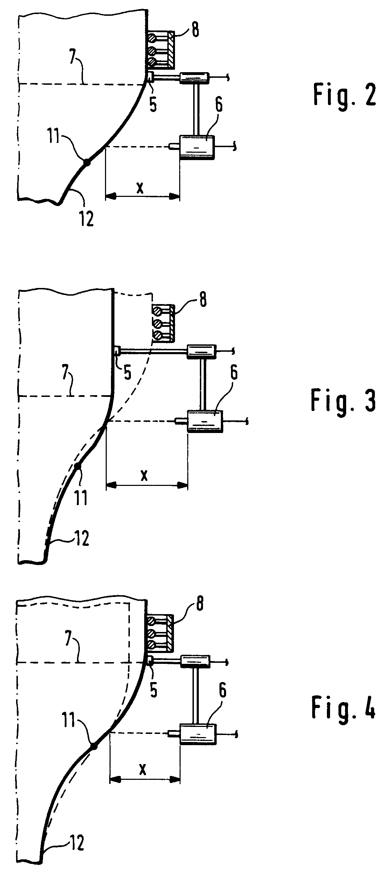

Anhand der Fig. 2 bis 4 wird nun die Regelung näher dargestellt.

Die untere Meßstelle 6, an der sich ein berührungslos arbeitender Meßaufnehmer befindet, damit keine Markierungen auf der noch plastischen Folie zurückbleiben, liegt unterhalb der Frostlinie 7, aber oberhalb des Wendepunktes 11 der Blasenkurve 12. Der obere Abtastpunkt 5 liegt oberhalb der Frostlinie 7.

Der Sensor 6 unterhalb der Frostlinie 7 übernimmt die Aufgabe der "Blasenregelung", also das Steuern der Zu- und Abluft derart, daß die Blase 12 am Maßort 6 einen konstanten Abstand x zum Meßaufnehmer 6 und damit normalerweise auch einen konstanten Durchmesser hat.

Die Figur 2 zeigt den "Normalzustand", bei dem sich die Frostlinie 7 in der richtigen Höhe befindet. Der Abstand x an der unteren Meßstelle 6 wird durch den Blasenregler 6 konstant gehalten. Die Zu- und Abluft wird also über den Blasenregler 10 derart geregelt, daß der Abstand x konstant gehalten wird. An der oberen Meßstelle wird durch den Fühler 5 ein bestimmter Blasendurchmesser festgestellt.

Wenn durch äußere Einflüsse die Frostlinie 7 in der aus Fig. 3 ersichtlichen Weise nach unten wandert, verändert sich die Blasenform. Sie nimmt dann die in der Fig. 3 durchgezogene gezeichnete Stellung ein. Der Blasenregler 10 regelt den Füllgrad der Blase wieder so, daß der Abstand x konstant bleibt. Dadurch wird die Blase kleiner; der Durchmesser der Blase wird also geringer. Dies wird von dem Meßglied 5 oberhalb der Frostlinie 7 festgestellt.

Durch einen geeigneten Regelkreis wird dann die Frostlinie so lange verstellt, bis der Fühler 5 in der aus der Fig. 4 ersichtlichen Weise wieder den richtigen Blasendurchmesser erkennt. Dann liegt auch die Frostlinie 7 wieder in der richtigen Höhe.

Der zweite, in Abhängigkeit von der oberen Meßstelle 5 arbeitende Regelkreis verändert die Ausstoßleistung und/oder die Temperatur des Extruders und/oder die Kühlluftmenge 1 derart, daß die äußere Begrenzung der Blasfolie an der oberen Meßstelle 5 konstant bleibt.

Statt des Fühlers 5 unterhalb des Kalibrierkorbes 8 kann auch die Messung der flachgelegten Breite der Folie nach dem Abzug benutzt werden.

## Patentansprüche

1. Verfahren zur Regelung des Durchmessers von in Blasfolienanlagen,
bestehend aus einem Extruder mit Folienblaskopf mit Innenkühlung, einem Kalibrierkorb und einer Flachlege- und Abzugseinrichtung,
hergestellten Schlauchfolien,
bei dem die ausgetauschte Innenkühlluftmenge und/oder die Extruderdrehzahl und/oder die Temperatur der extrudierten Kunststoffmasse und/oder die Abzugsgeschwindigkeit und/oder die Außenkühlung und/oder die Höhe des Kalibrierkorbes steuerbar sind,
**dadurch gekennzeichnet,**
daß der Abstand der Schlauchfolie im Bereich des Wendepunktes des Aufblasbereiches zu mindestens einem gestellfesten Sensor gemessen und durch einen ersten Regelkreis, der bei Abweichungen des Abstandes von einem vorgegebenen Sollwert die ausgetauschte Menge von Innenkühlluft entsprechend erhöht oder erniedrigt, auf dem Sollwert gehalten wird, und
daß der Durchmesser der Schlauchfolie oberhalb der Frostlinie gemessen und durch einen zweiten Regelkreis, der bei Abweichungen des Durchmessers von einem vorgegebenen Sollwert die Massetemperatur und/oder Extruderdrehzahl und/oder die Abzugsgeschwindigkeit entsprechend erhöht oder erniedrigt, auf dem Durchmessersollwert gehalten wird.

2. Verfahren nach Anspruch 1, dadurch gekennzeichnet, daß der Abstand der Schlauchfolie zu einem gestellfesten Sensor im Bereich zwischen dem Wendepunkt und der Frostlinie gemessen wird.

3. Verfahren nach Anspruch 1 oder 2, dadurch gekennzeichnet, daß die Blasfolie flachgelegt und die Breite der flachgelegten Folie gemessen wird.

4. Verfahren nach einem der Ansprüche 1 bis 3, dadurch gekennzeichnet, daß die äußere Begrenzung der Blasfolie an der ersten Meßstelle berührungslos gemessen wird.

5. Verfahren nach einem der Ansprüche 1 bis 4, dadurch gekennzeichnet, daß an der ersten Meßstelle mit mehreren Sensoren gemessen wird.
